# EUROPÄISCHE PATENTANMELDUNG

(11) **EP 4 523 805 A1**
(43) Veröffentlichungstag der Anmeldung: **19.03.2025**
(21) Anmeldenummer: 24198060.6
(22) Anmeldetag: 03.09.2024
(51) Int. Cl.: B08B 9/04, E03F 9/00, F16L 55/28, F16L 101/30

(54) **KANALINSPEKTIONS- UND/ODER WARTUNGSSYSTEM MIT HOCHDRUCKMODUL**

(30) Priorität: 14.09.2023 DE 102023124833
(71) Anmelder: iPEK International GmbH, 87477 Sulzberg (DE)
(72) Erfinder: Fuchsenthaler, Florian, 87509 Immenstadt (DE); Blinn, Thomas, 87437 Kempten (DE); Oesterle, Thomas, 6993 Mittelberg (AT)
(74) Vertreter: 2s-ip Schramm Schneider Bertagnoll Patent- und Rechtsanwälte Part mbB

(57) **Zusammenfassung**

Bereitgestellt wird ein Kanalinspektions- und/oder Wartungssystem (1) umfassend eine Inspektions- und/oder Wartungseinheit (2) und eine Druckfluideinheit (3), wobei die Druckfluideinheit (3) eine Vorrichtung (4) zum Bereitstellen eines Druckfluids aufweist, und wobei die Druckfluideinheit (3) zusammen mit der Inspektions- und/oder Wartungseinheit (2) in ein Kanalrohr (100) einbringbar und/oder in dem Kanalrohr (100) verfahrbar ist. Bereit gestellt wird ferner eine Druckfluideinheit (3) für eine Inspektions- und/oder Wartungseinheit (2) eines Kanalinspektions- und/oder Wartungssystems (1).

## Beschreibung

### Gebiet der Erfindung

Die Erfindung betrifft ein Kanalinspektions- und/oder Wartungssystem umfassend eine Inspektions- und/oder Wartungseinheit und eine Druckfluideinheit, sowie eine Druckfluideinheit für eine Inspektions- und/oder Wartungseinheit eines Kanalinspektions- und/oder Wartungssystems. Die Druckfluideinheit kann auch als Hochdruckmodul bezeichnet werden.

### Hintergrund der Erfindung

Im Bereich der Kanalinspektion und / oder Kanalwartung wird für diverse Anwendungen im Kanal Hochdruck benötigt. Beispielsweise wird für die Kanalreinigung mit Überdruck beaufschlagtes Wasser benötigt, um Verschmutzungen an der Kanalinnenwandung zu entfernen.

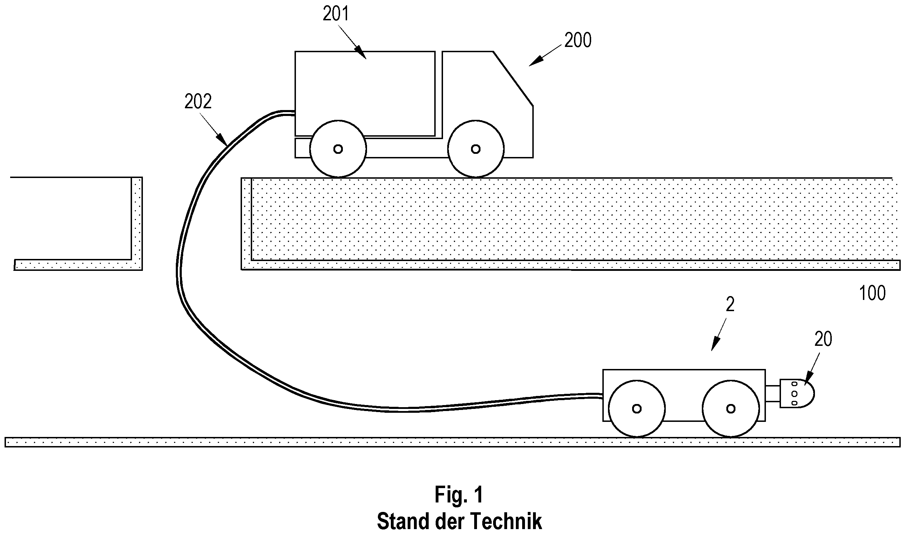

Ein System zur Kanalreinigung ist in **Fig. 1** gezeigt. Es umfasst eine Inspektions- und/oder Wartungseinheit 2, die über einen Hochdruckschlauch 202 mit einem Hochdruck-System 201 eines Inspektionswagen 200 gekoppelt ist. Während sich die Inspektions- und/oder Wartungseinheit 2 im Kanal 100 befindet ist der Inspektionswagen 200 mit dem Hochdruck-System 201 außerhalb des Kanals angeordnet, meist in der Nähe des Kanalschachtes. Die Inspektions- und/oder Wartungseinheit 2 weist eine Spüldüse 20, über die der Kanal gereinigt wird. Das Hochdruck-System 201 stellt mit einem Überdruck beaufschlagtes Spülwasser bereit und führt dieses über den Hochdruckschlauch 202 der Spüldüse 20 zu. Wir die Inspektions- und/oder Wartungseinheit 2 in dem Kanal 100 vorgefahren muss der Hochdruckschlauch nachgeführt.

Mittels des Hochdruck-Systems 201, das leistungsstarke Pumpen aufweist, muss enorm hoher Druck erzeugt werden, damit das Wasser mit einem bestimmten Druck bis an die Spüldüse gelangen kann. Wird anstelle von Druckwasser Druckluft benötigt, muss das Hochdruck-System 201 entsprechend leistungsstarke Kompressoren aufweisen. Der Druck, der an dem Hochdruck-Systems 201 erzeugt wird, muss meist deutlich höher sein, als der an der Inspektions- und/oder Wartungseinheit 2 benötigte Druck, um Verluste auf der zu überbrückenden Strecke (etwa wegen undichter Kupplungen oder defekter Schläuche) auszugleichen. Das ist ineffizient, insbesondere hinsichtlich der benötigten Energie. Im Betrieb verursachen solche Hochdruck-System eine enorme Lärmbelästigung.

Ein weiterer Nachteil ist, dass die Hochdruckschläuche schnell verschleißen, da Luft und / oder Wasser mit Hoch- und Höchstdruck über lange Strecken befördert werden müssen.

Nachteilig ist zudem, dass Hochdrucksysteme immer eine erhebliche Verletzungsgefahr bergen. Wenn beispielsweise eine Schlauchleitung defekt ist, insbesondere im Bereich des Inspektionswagens 200, kann dies unter Umständen lebensgefährlich für den Anwender sein.

### Aufgabe der Erfindung

Aufgabe der vorliegenden Erfindung ist es daher, Lösungen bereit zu stellen, die die vorstehend genannten Nachteile zumindest teilweise vermeiden.

### Erfindungsgemäße Lösung

Gelöst wird diese Aufgabe mit einem Kanalinspektions- und/oder Wartungssystem und einer Druckfluideinheit nach den unabhängigen Ansprüchen. Vorteilhafte Ausgestaltungen der Erfindung sind in den jeweiligen abhängigen Ansprüchen angegeben.

Bereitgestellt wird demnach ein Kanalinspektions- und/oder Wartungssystem umfassend
- eine Inspektions- und/oder Wartungseinheit und
- eine Druckfluideinheit,
   wobei
- die Druckfluideinheit eine Vorrichtung zum Bereitstellen eines Druckfluids aufweist,
- die Druckfluideinheit zusammen mit der Inspektions- und/oder Wartungseinheit in ein Kanalrohr einbringbar und/oder in dem Kanalrohr verfahrbar ist, und
- über zumindest eine Auslassöffnung der Vorrichtung zum Bereitstellen des Druckfluids das Druckfluid der Inspektions- und/oder Wartungseinheit zur Verwendung an der Inspektions- und/oder Wartungseinheit und/oder durch die Inspektions- und/oder Wartungseinheit zuführbar ist.

Auf Hochdruckschläuche und externe, d.h. außerhalb des Kanals angeordnete Kompressoren oder Pumpen kann so verzichtet werden.

Die Auslassöffnung kann mit einer Druckfluidleitung der Inspektions- und/oder Wartungseinheit koppelbar sein. Alternativ kann die Auslassöffnung über eine Druckfluidleitung mit der Inspektions- und/oder Wartungseinheit koppelbar sein.

Die Druckfluideinheit kann einen Tank zur Aufnahme eine Fluids aufweisen, wobei der Tank mit der Vorrichtung zum Bereitstellen des Druckfluids gekoppelt ist.

Vorteilhaft kann es sein, wenn die Vorrichtung zum Bereitstellen des Druckfluids
- einen Verdichter zum Bereitstellen eines mit einem Druck beaufschlagten Gases als Druckfluid, und/oder
- eine Pumpe, insbesondere Hochdruckpumpe, zum Bereitstellen einer mit einem Druck beaufschlagten Flüssigkeit als Druckfluid
umfasst.

Der Verdichter kann eine erste Ansaugöffnung aufweisen, über die das Gas dem Verdichter zuführbar ist. Alternativ oder zusätzlich kann die Pumpe eine zweite Ansaugöffnung aufweisen, über die die Flüssigkeit der Pumpe zuführbar ist. Vorteilhaft ist es, wenn die zweite Ansaugöffnung ausgestaltet ist, Flüssigkeit, insbesondere Wasser, von der Kanalsohle des Kanalrohres anzusaugen.

In einer Ausgestaltung der Erfindung ist die Druckfluideinheit
- integraler Bestandteil der Inspektions- und/oder Wartungseinheit, oder
- über eine Steckereinheit mit der Inspektions- und/oder Wartungseinheit gekoppelt, vorzugsweise lösbar gekoppelt.

Die Druckfluideinheit kann
- über eine Energieversorgungseinrichtung der Inspektions- und/oder Wartungseinheit, oder
- über einer externe Energieversorgungseinrichtung, die außerhalb des Kanalrohres angeordnet ist, oder
- über einen Akkumulator, der in oder an der Druckfluideinheit angeordnet ist mit elektrischer Energie versorgt werden.

Vorteilhaft ist es, wenn die Druckfluideinheit derart ausgestaltet ist, dass
- dem Verdichter sowohl über die erste Ansaugöffnung als auch über den Tank ein Gas zuführbar ist, insbesondere gleichzeitig zuführbar ist, oder
- der Pumpe sowohl über die zweite Ansaugöffnung als auch über den Tank eine Flüssigkeit zuführbar ist, insbesondere gleichzeitig zuführbar ist.

Bereit gestellt wird ferner eine Druckfluideinheit für eine Inspektions- und/oder Wartungseinheit eines Kanalinspektions- und/oder Wartungssystems, wobei die Druckfluideinheit
- eine Vorrichtung zum Bereitstellen eines Druckfluids aufweist, und
- ausgestaltet ist, zusammen mit der Inspektions- und/oder Wartungseinheit in ein Kanalrohr einbringbar und/oder in dem Kanalrohr verfahrbar zu sein,
und wobei die Vorrichtung zum Bereitstellen des Druckfluids zumindest eine Auslassöffnung aufweist, über die das Druckfluid der Inspektions- und/oder Wartungseinheit zur Verwendung an der Inspektions- und/oder Wartungseinheit und/oder durch die Inspektions- und/oder Wartungseinheit zuführbar ist.

Die Vorrichtung zum Bereitstellen des Druckfluids kann
- einen Verdichter zum Bereitstellen eines mit einem Druck beaufschlagten Gases als Druckfluid, und/oder
- eine Pumpe, insbesondere Hochdruckpumpe, zum Bereitstellen einer mit einem Druck beaufschlagten Flüssigkeit als Druckfluid
umfassen.

Der Verdichter kann eine erste Ansaugöffnung aufweisen, über die das Gas dem Verdichter zuführbar ist. Alternativ oder zusätzlich kann die Pumpe eine zweite Ansaugöffnung aufweisen, über die die Flüssigkeit der Pumpe zuführbar ist.

Die zweite Ansaugöffnung kann ausgestaltet sein, Flüssigkeit, insbesondere Wasser, von der Kanalsohle des Kanalrohres anzusaugen. Dadurch kann auf eine externe Zufuhr von beispielsweise Spülwasser zum Kanalinspektions- und/oder Wartungssystem verzichtet werden.

Die Druckfluideinheit kann einen Tank zur Aufnahme eine Fluids aufweisen, wobei der Tank mit der Vorrichtung zum Bereitstellen des Druckfluids gekoppelt ist.

Vorteilhaft kann es sein, wenn die Druckfluideinheit derart ausgestaltet ist, dass
- dem Verdichter sowohl über die erste Ansaugöffnung als auch über den Tank ein Gas zuführbar ist, insbesondere gleichzeitig zuführbar ist, oder
- der Pumpe sowohl über die zweite Ansaugöffnung als auch über den Tank eine Flüssigkeit zuführbar ist, insbesondere gleichzeitig zuführbar ist.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein aus dem Stand der Technik bekanntes System;
- Fig. 2: ein erfindungsgemäßes System gemäß einer ersten Ausgestaltung; und
- Fig. 3: ein erfindungsgemäßes System gemäß einer zweiten Ausgestaltung.

### Detaillierte Beschreibung der Erfindung

Gemäß der vorliegenden Erfindung wird der benötigte Druck genau dort erzeugt, wo er benötigt wird, nämlich in oder an der Inspektions- und/oder Wartungseinheit. Die Effizienz des Systems kann so deutlich erhöht werden. Druckabfälle, wie sie auf langen Übertragungsstrecken auftreten können, werden so vermieden. Gleichzeitig wird die Sicherheit deutlich erhöht, da lange Hochdruckschläuche entfallen und außerhalb des Kanals keine Hochdrucksysteme mehr benötigt werden. Mit Entfallen der Hochdruckschläuche entfällt auch die verschleißanfälligste Komponente des Systems. Die Lärmentwicklung geschieht im Kanal, sodass der Lärm nicht derart störend wirkt, wie etwa bei dem mit Bezug auf Fig. 1 beschriebenen System. Zudem kann der Energieverbrauch deutlich reduziert werden.

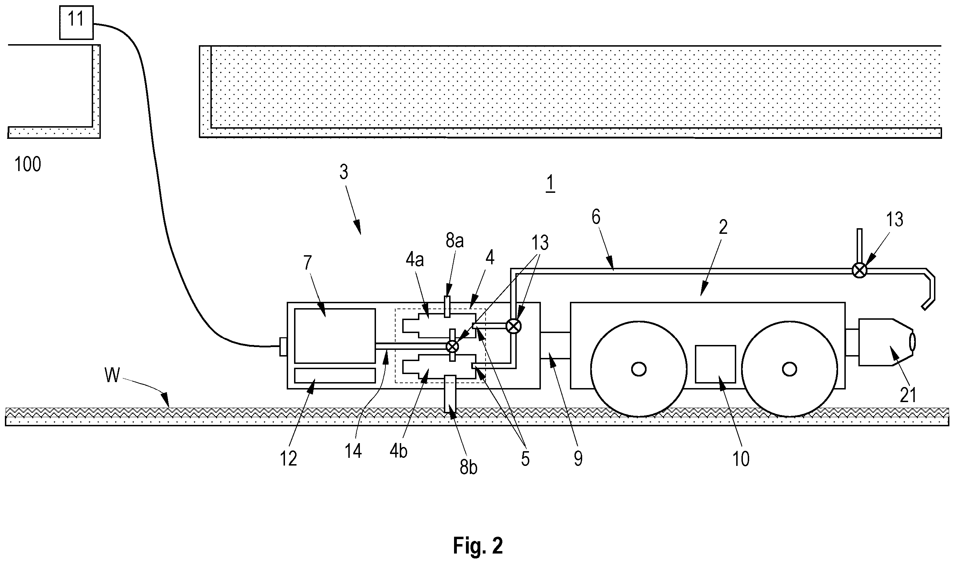

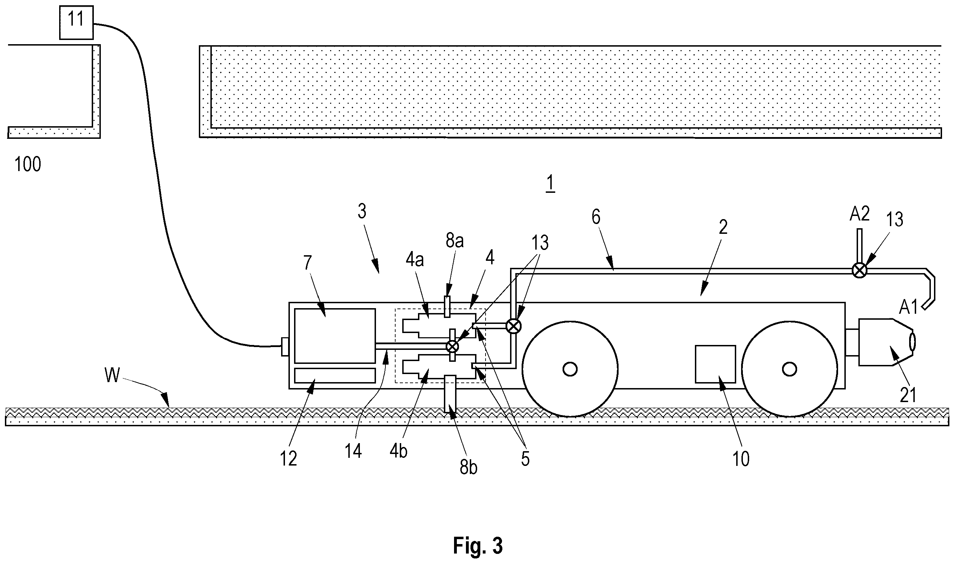

**Fig. 2** und **Fig. 3** zeigen ein erfindungsgemäßes Kanalinspektions- und/oder Wartungssystem 1.

Das Kanalinspektions- und/oder Wartungssystem 1 umfasst eine Inspektions- und/oder Wartungseinheit 2 (nachfolgend auch als Inspektionseinheit 2 bezeichnet) und eine Druckfluideinheit 3.

Nach der Ausgestaltung gemäß Fig. 2 ist die Druckfluideinheit 3 über eine Steckereinheit 9 mit der Inspektions- und/oder Wartungseinheit 2 gekoppelt, vorzugsweise lösbar gekoppelt. Die Druckfluideinheit 3 kann als eine Art Anhänger ausgestaltet sein, der hinter der Inspektionseinheit 2 hergezogen wird. Die Druckfluideinheit 3 kann hierzu hier nicht gezeigte Räder aufweisen.

Alternativ, wie in Fig. 3 gezeigt, die Druckfluideinheit 3 integraler Bestandteil der Inspektionseinheit 2 sein, also in die Inspektionseinheit 2 integriert sein. Auf eine Steckereinheit 9, wie in Fig. 2 gezeigt, kann hierbei verzichtet werden.

Bis auf den vorstehend genannten Unterschied der beiden Systeme gemäß Fig. 2 und Fig. 3 sind die beiden in Fig. 2 und Fig. 3 gezeigten Systeme weitgehend identisch und werden daher nachfolgend gemeinsam beschrieben.

Erfindungsgemäß ist die Druckfluideinheit 3 zusammen mit der Inspektionseinheit 2 in den Kanal 100 einbringbar und/oder in dem Kanal 100 verfahrbar. Das heißt, dass auch bei einer zweiteiligen Ausgestaltung des Systems, wie in Fig. 2 gezeigt, sich die Druckfluideinheit 3 stets an der Inspektionseinheit 2 befindet.

Die Druckfluideinheit 3 weist eine Vorrichtung 4 zum Bereitstellen eines Druckfluids auf. Diese Vorrichtung 4 ist in Fig. 2 und Fig 3 als gestrichelte Einheit gezeigt. Bei dem Druckfluid kann es sich um ein mit einem Überdruck beaufschlagten Gas und/oder um eine mit einem Überdruck beaufschlagten Flüssigkeit handeln. Wie nachfolgend näher beschrieben wird, kann mit der Vorrichtung 4 auch ein mit einem Überdruck beaufschlagtes Flüssigkeits-Gas-Gemisch bereitgestellt werden.

In einer alternativen Ausgestaltung können dem Druckfluid (Gas oder Flüssigkeit) auch Feststoffpartikel zugefügt werden und durch die Vorrichtung 4 bereitgestellt werden. Beispielsweise können abrasive Partikel dem Druckfluid untergemischt werden, um beispielsweise die Reinigungswirkung eines Wasserstrahls zu erhöhen.

Über zumindest eine Auslassöffnung 5 der Vorrichtung 4 kann das Druckfluid der Inspektionseinheit 2 zur Verwendung an der Inspektionseinheit 2 und/oder durch die Inspektionseinheit 2 zugeführt werden. Fig. 2 und Fig. 3 zeigen zwei solche Auslassöffnungen 5.

Die Auslassöffnung 5 ist mit einer Druckfluidleitung 6 der Inspektionseinheit 2 koppelbar ist. Alternativ kann die Auslassöffnung 5 über eine Druckfluidleitung 6 mit der Inspektionseinheit 2 koppelbar sein. Über die Auslassöffnung 5 bzw. über die Auslassöffnungen 5 wird das von der Druckfluideinheit 6 erzeugte und bereitgestellte Druckfluid der Druckfluidleitung 6 zugeführt und über die Druckfluidleitung 6 bis an den Verwendungsort transportiert.

Beispielsweise kann ein mit einem Überdruck beaufschlagtes Gas (z.B. Luft) bis an die Linse der Kamera 21 transportiert werden, um die Linse der Kamera zu reinigen und/oder zu trocknen (über den Auslass A1 der Druckfluidleitung 6). Ebenso kann zum Reinigen der Linse auch eine mit einem Überdruck beaufschlagte Flüssigkeit (z.B. Wasser) bis an die Linse transportiert werden. Das mit einem Überdruck beaufschlagte Gas kann an der Linse auch zum Erzeugen einer Sperrluft verwendet werden, um die Linse während eines Fräs- oder Spülvorganges sauber zu halten und/oder das Risiko von Beschädigungen zu verringern.

In einem weiteren Beispiel kann eine mit einem Überdruck beaufschlagte Flüssigkeit auch zum Entfernen von Verunreinigungen oder Ablagerungen an der Kanalinnenwandung oder in einem Seiteinlauf mittels eines Höchstdruckwasserstrahls verwendet werden, etwa über den Auslass A2 der Druckfluidleitung 6. Damit kann auch eine Muffe gereinigt werden, die inspiziert werden muss, aber noch verunreinigt ist.

Vorstehen sind einige Beispiel für die Verwendung des Druckfluids genannt, wobei die Erfindung nicht auf diese Beispiele beschränkt ist. Wesentlich für die Erfindung ist, dass eine Druckfluid der Druckfluidleitung 6 zugeführt wird und über die Druckfluidleitung 6 bis an den Ort der Verwendung transportiert wird. Wo sich der Ort der Verwendung befindet, hängt also im Wesentlichen davon ab, wo sich der Auslass bzw. die Auslässe der Druckfluidleitung 6 befinden.

In der Druckfluidleitung 6 können (an sich bekannte) Ventile 13 vorgesehen sein, mit denen der Fluss der Druckfluids gesteuert werden kann.

Die Druckfluideinheit 3 kann einen Tank 7 zur Aufnahme eine Fluids (Gas oder Flüssigkeit) aufweisen, wobei der Tank 7 über eine Ansaugleitung 14 mit der Vorrichtung 4 zum Bereitstellen des Druckfluids gekoppelt ist. Die Verwendung eines solchen Tankes ist optional. Das erfindungsgemäße System kann auch ohne einen solchen Tank verwendet werden, wie nachfolgend beschrieben wird.

Die Vorrichtung 4 zum Bereitstellen des Druckfluids kann
- einen Verdichter 4a zum Bereitstellen eines mit einem Druck beaufschlagten Gases als Druckfluid, und/oder
- eine Pumpe 4b, insbesondere Hochdruckpumpe, zum Bereitstellen einer mit einem Druck beaufschlagten Flüssigkeit als Druckfluid
aufweisen.

Die beiden in Fig. 2 und Fig. 3 gezeigten Systeme weisen sowohl einen Verdichter 4a als auch eine Pumpe 4b auf. Gleichwohl können im Sinne der Erfindung auch nur eine Pumpe 4b oder auch nur ein Verdichter 4a vorgesehen sein.

Der Verdichter 4a ist angepasst, ein Gas mit einem Überdruck zu beaufschlagen, um das Gas zu Komprimieren bzw. den Druck des Gases zu erhöhen. Die Pumpe 4b ist angepasst, eine Flüssigkeit mit einem Überdruck zu beaufschlagen.

Über die Auslassöffnung 5 des Verdichters 4a wird der Druckfluidleitung 6 ein mit einem Überdruck beaufschlagtes Gas (z.B. Luft) zugeführt. Über die Auslassöffnung 5 der Pumpe 4b wird der Druckfluidleitung 6 eine mit einem Überdruck beaufschlagte Flüssigkeit (z.B. Wasser) zugeführt. Stromaufwärts ist in der Druckfluidleitung 6 ein Ventil 13 vorgesehen (das Ventil 13 direkt nach den beiden Auslassöffnungen 5), mit dem steuerbar ist, welche der beiden (oder beide) Auslassöffnungen 5 mit der Druckfluidleitung operativ gekoppelt sind, d.h. welche der beiden Auslassöffnungen 5 effektiv geöffnet ist. Dieses Ventil 13 kann so ausgestaltet sein, dass beide Auslassöffnungen 5 effektiv geöffnet sind, sodass es möglich ist, einer Druckflüssigkeit (aus der Pumpe 4b) ein Gas (aus dem Verdichters 4a) zuzumischen (oder umgekehrt)

Bei der in Fig. 2 und Fig. 3 gezeigten Ausführung des erfindungsgemäßen Systems weist der Verdichter 4a eine erste Ansaugöffnung 8a auf, über die ein Gas (z.B. Luft aus der Umgebung) dem Verdichter 4a zuführbar ist. Die Pumpe 4b weist eine zweite Ansaugöffnung 8b auf, über die Flüssigkeit (z.B. Wasser W aus der Sohle des Kanals 100) der Pumpe 4b zuführbar ist. In diesem Fall kann auf den vorstehend beschriebenen Tank 7 verzichtet werden, da sowohl der Pumpe 4b als auch dem Verdichter 4a das jeweils benötigte Fluid über die jeweiligen Ansaugöffnungen 8b, 8a aus der Umgebung zugeführt werden.

Es ist auch möglich nur eine der beiden Ansaugöffnungen vorzusehen. In diesem Fall ist es vorgesehen, die jeweils andere Einheit (Verdichter 4a oder Pumpe 4b) über die Ansaugleitung 14 mit dem Tank 7 zu koppeln.

Der Tank 7 ist über eine Ansaugleitung 14 mit dem Verdichter 4a und/oder mit der Pumpe 4b gekoppelt. Weist der Verdichter 4a keine Ansaugöffnung 8a auf, dann ist der Tank auf jeden Fall zumindest mit dem Verdichter 4a gekoppelt. Weist die Pumpe keine Ansaugöffnung 8b auf, ist der Tank auf jeden Fall zumindest mit der Pumpe 4b gekoppelt.

Bei dem in Fig. 2 und Fig. 3 gezeigten Beispiel ist der Tank 7 sowohl mit dem Verdichter 4a als auch mit der Pumpe 4b koppelbar. Mit Hilfe eines Ventils 13 in der Ansaugleitung 14 kann gezielt eingestellt werden, welche der beiden Einheiten 4a, 4b operativ mit dem Tank 7 gekoppelt ist.

In einer konkreten Ausgestaltung der Erfindung ist der Tank 7 nur mit der Pumpe 4b gekoppelt, sodass auf das Ventil 13 gegebenenfalls verzichtet werden kann. Der Verdichter 4a weist dann eine Ansaugöffnung 8a auf, um dem Verdichter 4a Umgebungsluft zuzuführen. Über die Ansaugöffnung 8b kann dann der Pumpe 4b Wasser W aus der Kanalsohle zugeführt werden. Zusätzlich kann der Pumpe 4b über die Ansaugleitung 14 eine weitere Flüssigkeit zugeführt werden, die dann mit dem Wasser W aus der Kanalsohle vermischt wird. Bei einer solchen weiteren Flüssigkeit kann es sich beispielsweise um ein Reinigungsmittel oder dergleichen handeln.

Je nach konkreter Ausgestaltung der Pumpe 4b können der Pumpe 4b über die Ansaugleitung 14 auch abrasive Partikel zugeführt werden. In diesem Fall sind in dem Tank 7 solche Partikel gespeichert.

Ist in der Kanalsohle zu wenig Wasser W zum Ansaugen für die Pumpe 4b vorhanden, kann über den Kanalschacht Wasser dem Kanal zugeführt werden. Ein Wasserschlauch, der mit der Inspektionseinheit 2 gekoppelt ist oder der bis an die Inspektionseinheit 2 geführt ist, wird hierfür nicht benötigt. Die Pumpe 4b bzw. eine Ansaugsteuerung der Pumpe 4b kann entsprechende Sensoren aufweisen, mit denen detektiert werden kann, ob der Wasserstand in der Kanalsohle ausreichend ist. Ein zu niedriger Wasserstand kann dem Bedienpersonal außerhalb des Kanals signalisiert werden, welches dann Wasser über den Schacht dem Kanak zuführen kann.

Die Druckfluideinheit 3 bzw. die Pumpe 4b und der Verdichter 4a können über eine Energieversorgungseinrichtung 10 der Inspektionseinheit 2 mit elektrischer Energie versorgt werden. Die Energieversorgungseinrichtung 10 kann einen Akkumulator aufweisen. Alternativ kann die Energieversorgungseinrichtung 10 auch mit einer Stromversorgung 11 außerhalb des Kanals gekoppelt sein.

Alternativ können die Druckfluideinheit 3 bzw. die Pumpe 4b und der Verdichter 4a über einer externe Energieversorgungseinrichtung 11, die außerhalb des Kanalrohres 100 angeordnet ist, mit elektrischer Energie versorgt werden. Mit dieser externen Energieversorgungseinrichtung 11 kann auch Inspektionseinheit 2 mit elektrischer Energie versorgt werden.

In einer weiteren alternativen Ausgestaltung kann die Druckfluideinheit 3 einen Akkumulator 12 aufweisen, mit dem die Pumpe 4b und der Verdichter 4a mit elektrischer Energie versorgt werden.

Mit Bezug auf Fig. 2 und Fig. 3 ist ein System beschrieben worden, bei dem die Inspektions- und/oder Wartungseinheit 2 eine Kamera 21 aufweist. Zusätzlich oder alternativ zur Kamera 21 kann die Inspektions- und/oder Wartungseinheit 2 auch eine Spüldüse aufweisen, die mit der Druckfluideinheit 3 gekoppelt ist, wobei diese Kopplung über die Druckfluidleitung 6 realisiert werden kann. Der Spüldüse kann dann eine Flüssigkeit aus dem Tank 7 und/oder Wasser W aus der Kanalsohle als Hockdruckflüssigkeit zugeführt werden. Erfindungsgemäß wird damit auch bei einer Kanalreinigung, wie mit Bezug auf Fig. 1 erläutert, kein Hochdruckschlauch mehr benötigt.

Die Steuerung des Systems und insbesondere der Druckfluideinheit 3 kann von außerhalb des Kanals erfolgen. Hierzu kann die Druckfluideinheit 3 über eine Kommunikationsverbindung mit einer (hier nicht gezeigten) außerhalb des Kanals angeordneten Steuereinheit gekoppelt sein. Bei der Kommunikationsverbindung kann es sich um eine drahtgebundene oder drahtlose Kommunikationsverbindung handeln.

Das erfindungsgemäße System ermöglicht es, Hochdruck im Kanal bereitzustellen, ohne dass hierfür ein außerhalb des Kanals angeordnetes Hochdruck-System und eine Hochdruckschlauch nötig sind, um verschiedenste Aufgaben zu erledigen, beispielsweise
- Reinigen der Kamera mittels Wasser und anschließendes Trocknen der Linse mit Druckluft,
- Reinigen einer Muffe, welche inspiziert werden muss, aber noch verunreinigt ist,
- Entfernen von Verunreinigungen oder Ablagerungen mittels Höchstdruckwasserstrahl,
- Erzeugung von Sperrluft, um die Kameralinse sauber zu halten, und/oder
- Durchführen einer Kanalreinigung.

### Bezugszeichen:

- 1: Kanalinspektions- und/oder Wartungssystem
- 2: Inspektions- und/oder Wartungseinheit
- 3: Druckfluideinheit
- 4: Vorrichtung zum Bereitstellen eines Druckfluids (als Teil der Druckfluideinheit 3)
- 4a: Verdichter (als Teil der Druckfluideinheit 3)
- 4b: Pumpe (als Teil der Druckfluideinheit 3)
- 5: Auslassöffnung der Vorrichtung 4
- 6: Druckfluidleitung
- 7: Tank (als Teil der Druckfluideinheit 3)
- 8a: erste Ansaugöffnung (des Verdichters 4a)
- 8b: zweite Ansaugöffnung (der Pumpe 4b)
- 9: Steckereinheit zwischen Inspektions- und/oder Wartungseinheit 2 und Druckfluideinheit 3
- 10: Energieversorgungseinrichtung der Inspektions- und/oder Wartungseinheit 2
- 11: externe Energieversorgungseinrichtung
- 12: Akkumulator
- 13: Ventil
- 14: Ansaugleitung zwischen Tank 7 und Vorrichtung 4
- 20: Spüldüse
- 21: Kamera
- 100: Kanalrohr
- 200: Inspektionswagen
- 201: Hochdruck-System
- 202: Hochdruckschlauch
- A1, A2: Auslässe der Druckfluidleitung 6
- W: Wasser

## Patentansprüche

1. Kanalinspektions- und/oder Wartungssystem (1) umfassend
- eine Inspektions- und/oder Wartungseinheit (2) und
- eine Druckfluideinheit (3),
wobei
- die Druckfluideinheit (3) eine Vorrichtung (4) zum Bereitstellen eines Druckfluids aufweist,
- die Druckfluideinheit (3) zusammen mit der Inspektions- und/oder Wartungseinheit (2) in ein Kanalrohr (100) einbringbar und/oder in dem Kanalrohr (100) verfahrbar ist, und
- über zumindest eine Auslassöffnung (5) der Vorrichtung (4) zum Bereitstellen des Druckfluids das Druckfluid der Inspektions- und/oder Wartungseinheit (2) zur Verwendung an der Inspektions- und/oder Wartungseinheit (2) und/oder durch die Inspektions- und/oder Wartungseinheit (2) zuführbar ist.

2. Kanalinspektions- und/oder Wartungssystem (1) nach dem vorhergehenden Anspruch, wobei
- die Auslassöffnung (5) mit einer Druckfluidleitung (6) der Inspektions- und/oder Wartungseinheit (2) koppelbar ist, oder
- die Auslassöffnung (5) über eine Druckfluidleitung (6) mit der Inspektions- und/oder Wartungseinheit (2) koppelbar ist.

3. Kanalinspektions- und/oder Wartungssystem (1) nach einem der vorhergehenden Ansprüche, wobei die Druckfluideinheit (3) einen Tank (7) zur Aufnahme eine Fluids aufweist, wobei der Tank mit der Vorrichtung (4) zum Bereitstellen des Druckfluids gekoppelt ist.

4. Kanalinspektions- und/oder Wartungssystem (1) nach einem der vorhergehenden Ansprüche, wobei die Vorrichtung (4) zum Bereitstellen des Druckfluids
- einen Verdichter (4a) zum Bereitstellen eines mit einem Druck beaufschlagten Gases als Druckfluid, und/oder
- eine Pumpe (4b), insbesondere Hochdruckpumpe, zum Bereitstellen einer mit einem Druck beaufschlagten Flüssigkeit als Druckfluid
umfasst.

5. Kanalinspektions- und/oder Wartungssystem (1) nach dem vorhergehenden Anspruch, wobei
- der Verdichter (4a) eine erste Ansaugöffnung (8a) aufweist, über die das Gas dem Verdichter (4a) zuführbar ist, und/oder
- die Pumpe (4b) eine zweite Ansaugöffnung (8b) aufweist, über die die Flüssigkeit der Pumpe (4b) zuführbar ist.

6. Kanalinspektions- und/oder Wartungssystem (1) nach dem vorhergehenden Anspruch, wobei die zweite Ansaugöffnung (8b) ausgestaltet ist, Flüssigkeit, insbesondere Wasser (W), von der Kanalsohle des Kanalrohres (100) anzusaugen.

7. Kanalinspektions- und/oder Wartungssystem (1) nach einem der vorhergehenden Ansprüche, wobei die Druckfluideinheit (3)
- integraler Bestandteil der Inspektions- und/oder Wartungseinheit (2) ist, oder
- über eine Steckereinheit (9) mit der Inspektions- und/oder Wartungseinheit (2) gekoppelt, vorzugsweise lösbar gekoppelt, ist.

8. Kanalinspektions- und/oder Wartungssystem (1) nach einem der vorhergehenden Ansprüche, wobei die Druckfluideinheit (3)
- über eine Energieversorgungseinrichtung (10) der Inspektions- und/oder Wartungseinheit (2), oder
- über einer externe Energieversorgungseinrichtung (11), die außerhalb des Kanalrohres (100) angeordnet ist, oder
- über einen Akkumulator (12), der in oder an der Druckfluideinheit (3) angeordnet ist
mit elektrischer Energie versorgt wird.

9. Kanalinspektions- und/oder Wartungssystem (1) nach Anspruch 3 und Anspruch 5, wobei die Druckfluideinheit (3) derart ausgestaltet ist, dass
- dem Verdichter (4a) sowohl über die erste Ansaugöffnung (8a) als auch über den Tank (7) ein Gas zuführbar ist, insbesondere gleichzeitig zuführbar ist, oder
- der Pumpe (4b) sowohl über die zweite Ansaugöffnung (8b) als auch über den Tank eine Flüssigkeit zuführbar ist, insbesondere gleichzeitig zuführbar ist.

10. Druckfluideinheit (3) für eine Inspektions- und/oder Wartungseinheit (2) eines Kanalinspektions- und/oder Wartungssystems (1), wobei die Druckfluideinheit (3)
- eine Vorrichtung (4) zum Bereitstellen eines Druckfluids aufweist, und
- ausgestaltet ist, zusammen mit der Inspektions- und/oder Wartungseinheit (2) in ein Kanalrohr (100) einbringbar und/oder in dem Kanalrohr (100) verfahrbar zu sein,
und wobei die Vorrichtung (4) zum Bereitstellen des Druckfluids zumindest eine Auslassöffnung (5) aufweist, über die das Druckfluid der Inspektions- und/oder Wartungseinheit (2) zur Verwendung an der Inspektions- und/oder Wartungseinheit (2) und/oder durch die Inspektions- und/oder Wartungseinheit (2) zuführbar ist.

11. Druckfluideinheit (3) nach dem vorhergehenden Anspruch, wobei die Vorrichtung (4) zum Bereitstellen des Druckfluids
- einen Verdichter (4a) zum Bereitstellen eines mit einem Druck beaufschlagten Gases als Druckfluid, und/oder
- eine Pumpe (4b), insbesondere Hochdruckpumpe, zum Bereitstellen einer mit einem Druck beaufschlagten Flüssigkeit als Druckfluid umfasst.

12. Druckfluideinheit (3) nach dem vorhergehenden Anspruch, wobei
- der Verdichter (4a) eine erste Ansaugöffnung (8a) aufweist, über die das Gas dem Verdichter (4a) zuführbar ist, und/oder
- die Pumpe (4b) eine zweite Ansaugöffnung (8b) aufweist, über die die Flüssigkeit der Pumpe (4b) zuführbar ist.

13. Druckfluideinheit (3) nach dem vorhergehenden Anspruch, wobei die zweite Ansaugöffnung (8b) ausgestaltet ist, Flüssigkeit, insbesondere Wasser, von der Kanalsohle des Kanalrohres (100) anzusaugen.

14. Druckfluideinheit (3) nach einem der vorhergehenden Ansprüche 10 bis 13, wobei die Druckfluideinheit (3) einen Tank (7) zur Aufnahme eine Fluids aufweist, wobei der Tank mit der Vorrichtung (4) zum Bereitstellen des Druckfluids gekoppelt ist.

15. Druckfluideinheit (3) nach Anspruch 11 und Anspruch 14, wobei die Druckfluideinheit (3) derart ausgestaltet ist, dass
- dem Verdichter (4a) sowohl über die erste Ansaugöffnung (8a) als auch über den Tank (7) ein Gas zuführbar ist, insbesondere gleichzeitig zuführbar ist, oder
- der Pumpe (4b) sowohl über die zweite Ansaugöffnung (8b) als auch über den Tank eine Flüssigkeit zuführbar ist, insbesondere gleichzeitig zuführbar ist.
